# EUROPÄISCHE PATENTSCHRIFT

(11) **EP 2 346 719 B1**
(45) Veröffentlichungstag und Bekanntmachung des Hinweises auf die Patenterteilung: **15.05.2013**
(21) Anmeldenummer: 08875538.4
(22) Anmeldetag: 23.12.2008
(51) Int. Cl.: B60R 1/06, B60R 1/076

(54) **RASTGELENKBAUTEIL, INSBESONDERE FÜR EINE HALTERUNG EINES AUSSENSPIEGELS FÜR NUTZFAHRZEUGE SOWIE EIN AUSSENSPIEGEL FÜR NUTZFAHRZEUGE MIT EINEM SOLCHEN RASTGELENKBAUTEIL**
RETENTION HINGE COMPONENT, IN PARTICULAR FOR MAINTAINING AN EXTERNAL REARVIEW MIRROR OF A UTILITY VEHICLE AND EXTERNAL REARVIEW MIRROR FOR A UTILITY VEHICLE COMPRISING SAID TYPE OF RETENTION HINGE COMPONENT
COMPOSANT D'ARTICULATION DE RETENUE, EN PARTICULIER POUR LA FIXATION D'UN RÉTROVISEUR EXTÉRIEUR POUR DES VÉHICULES UTILITAIRES ET RÉTROVISEUR EXTÉRIEUR POUR VÉHICULE UTILITAIRE COMPRENANT LEDIT COMPOSANT

(30) Priorität: 11.09.2008 DE 102008046794
(43) Veröffentlichungstag der Anmeldung: 27.07.2011
(73) Patentinhaber: MEKRA Lang GmbH & Co. KG, 90765 Fürth (DE)
(72) Erfinder: LANG, Werner, 91465 Ergersheim (DE); DENKFELDER, Jochen, 91710 Gunzenhausen (DE)
(74) Vertreter: Winter, Brandl, Fürniss, Hübner, Röss, Kaiser, Polte - Partnerschaft
(86) Internationale Anmeldenummer: PCT/EP2008/068246
(87) Internationale Veröffentlichungsnummer: WO 2010/028698

(56) Entgegenhaltungen:
- GB-A- 2 049 586
- GB-A- 2 374 578
- US-A- 4 466 594

## Beschreibung

Die Erfindung betrifft ein Rastgelenkbauteil, insbesondere für eine Halterung eines Außenspiegels für Nutzfahrzeuge nach dem Oberbegriff des Anspruch 1 sowie einem Außenspiegel mit einem solchen Rastgelenkbauteil nach Anspruch 20.

Außenspiegel an Kraftfahrzeugen sind üblicherweise nicht fest montiert sondern lassen sich in Ihrer Winkelstellung bezüglich des Fahrzeugs verändern. Hierzu werden häufig Rastgelenke in einer Vielzahl von Ausgestaltungen eingesetzt. Beispielsweise ist aus der EP 0 527 455 A1 ein Rastgelenk bekannt bei dem ein erster und ein zweiter Teil eines ersten Rastarms an einem langgestreckten Achsgelenkbauteil mit Rastmechanismus angreifen. Aus der EP 1 886 873 A1 ist ebenfalls ein Rastgelenk beziehungsweise ein Rastgelenkbauteil bekannt, bei dem ein U-förmiger erster Achsarm den Lagerbock eines zweiten Rastarms umgreift. Das Achsgelenkbauteil ist als Teil des Rastmechanismus ausgebildet. Aus der DE-OS 27 26 470 ist ebenfalls ein Rastgelenkbauteil zur verschwenkbaren Halterung eines Außenspiegels an einem Kfz bekannt. Das Rastgelenkbauteil umfasst ebenfalls einen ersten und zweiten Rastarm der über ein im Wesentlichen tassenförmiges Rastgelenk miteinander verbunden sind. Ein ähnliches Rastgelenk ist auch aus der DE 10 2006 028 073 B4 bekannt.

Aus der GB 658 679 A ist ein Rastgelenkbauteil mit einem ersten und einem zweiten Rastarm bekannt, die über ein Gelenkachsenbauteil schwenkbar miteinander verbunden sind. Der erste Rastarm umfasst zwei einander gegenüberliegende Halteelemente für das Gelenkachsenbauteil und eine erste Rastfläche. Der zweite Rastarm umfasst einen Lagerbock, der von dem Gelenkachsenbauteil durchsetzt wird, und eine zweite Rastfläche, die in die komplementäre erste Rastfläche eingreift. Das Gelenkachsenbauteil umfasst eine Spiralfeder durch die die beiden Rastflächen und damit die beiden Rastarme gegeneinander verspannt werden.

Auch aus GB 2 049 586 A ist ein Rastgelenkbauteil mit einem zweiteiligen Rastarm bekannt. Die beiden Rastarmteile erstrecken sich von dem Gelenkachsenbauteil getrennt weg und sind am anderen Ende miteinander verbunden.

Nachteilig bei diesen bekannten Rastgelenken ist es, dass die Bauhöhe in Richtung der Rastgelenkachse vergleichsweise hoch ist, da das Rastgelenk aufgrund der zu übertragenden Kräfte sehr stabil ausgelegt werden muss.

Aus der GB 2 374 578 A ist ein Rastgelenkbauteil mit geringer Bauhöhe bekannt.

Aus der US 4 466 594 A ist ein Rastgelenkbauteil mit den Merkmalen des Oberbegriffs des Anspruchs 1 und mit einem ersten und einem zweiten Rastarm bekannt, wobei der erste Rastarm ein erstes und ein zweites Rastarmteil in Form von zwei Halbschalen aufweist, die an glatten Kontaktflächen einander kontaktieren. Aufgrund der glatten Kontaktflächen erfolgt keine optimale Kraftübertragung zwischen den beiden Haltearmen.

Ausgehend von der US 4 466 594 A ist es Aufgabe der vorliegenden Erfindung ein Rastgelenkbauteil anzugeben, bei dem die Kraftübertragung zwischen den beiden Rastarmen verbessert ist. Weiter ist es Aufgabe der vorliegenden Erfindung einen entsprechenden Außenspiegel mit einem solchen Rastgelenkbauteil anzugeben.

Die Lösung dieser Aufgabe erfolgt durch die Merkmale des Anspruchs 1 beziehungsweise 20.

Dadurch, dass die beiden Rastarmteile des ersten Rastarms an komplementären Fügeflächen formschlüssig zusammengefügt sind, lassen sich Kräfte gleichmäßig von einem Rastarm über das Gelenkachsenbauteil an den zweiten Rastarm übertragen. Durch den zweiteiligen ersten Rastarm wird eine Sandwichstruktur geschaffen, die im Gegensatz zu dem zweiteiligen Rastarm gemäß der EP 527 455 B1, der GB 658 679 A oder der US 4 466 594 A eine Kraftübertragung von dem Gelenkachsenbauteil auf dem ersten Rastarm über dessen gesamte einander zugeordnete Fläche erlaubt. Die Krafteinleitung erfolgt aus den beiden Halteteilen flächig in den Rest der beiden Rastarmteile. Hierdurch werden bei einer wesentlich reduzierten Bauhöhe des Restgelenkbauteils die bei Kfz-Außenspiegeln auftretenden Kräfte sicher übertragen werden. Durch die Formschlüssigkeit wird auch die Stabilität des erfindungsgemäßen Rastgelenkbauteils verbessert.

Dadurch, dass die beiden Rastarmteile des ersten Rastarms flächig einander zugeordnet sind und eine große gemeinsame Querschnittsfläche - gemeinsame Fügefläche - aufweisen, ist eine sehr schmale Bauhöhe möglich. Die notwendige Kraftübertragung wird gewährleistet, indem die Querschnittsfläche quer zur Rastgelenkachse größer ist als in Richtung der Rastgelenkachse - Anspruch 3.

Gemäß einer bevorzugten Ausführungsform nach Anspruch 4 sind die beiden Rastarmteile in etwa gleich groß, wodurch eine möglichst "vollflächige" Krafteinleitung in den ersten Rastarm erfolgt.

Da es unter Umständen sinnvoll ist Anschlusselemente, zum Beispiel für den Anschluss des Spiegelkopfes nur an einem der beiden Rastarmteile des ersten Spiegelarms auszubilden, ergeben sich auch Ausführungsformen, bei denen die Querschnittsfläche quer zur Rastgelenkachse der beiden Rastarmteil des ersten Rastarms unterschiedlich groß ist. In diesem Fall ist es jedoch wichtig, dass die Querschnittsfläche des kleineren Rastarms wenigstens doppelt so groß ist, wie die erste oder zweite Rastfläche. Auf diese Weise wird gewährleistet, dass ausreichend Fläche für die Krafteinleitung von und zu dem Gelenkachsenbauteil vorhanden ist - Anspruch 5.

Durch die vorteilhafte Ausgestaltung der Erfindung nach Anspruch 6 und 7 wird das notwendige Federelement zum verspannen der beiden Rastflächen gegeneinander auf einfache Weise zwischen die beiden Hälften des ersten Rastarms integriert.

Nach der vorteilhaften Ausgestaltung der Erfindung nach Anspruch 8 und 9 verringert sich durch den fest mit dem Halteteil des ersten Rastarmteils verbundenen Verbindungsdorns die Anzahl der notwendigen Teile für das Rastgelenkbauteil, so dass dessen Aufbau einfacher wird.

Nach der vorteilhaften Ausgestaltung der Erfindung nach Anspruch 10 und 11 wird über dem Verbindungsdorn, der in die Aufnahme eingreift, eine stabile Verbindung der beiden Rastarmteile des ersten Rastarms ermöglicht.

Durch die vorteilhafte Ausgestaltung der Erfindung nach Anspruch 13 wird die Steifigkeit des ersten Rastarms erhöht. Auch durch die bevorzugte Ausführungsform nach Anspruch 14 mit Verstärkungsrippen erhöht sich die Stabilität und Steifigkeit des ersten Rastarms.

Durch die vorteilhafte Ausgestaltung der Erfindung nach Anspruch 15 und 16 ergibt sich ein einfacher Aufbau des zweiten Rastarms. Durch die Dimensionierung der zentralen Öffnung in den beiden Stirnseiten und der Aufnahme für den Schraubdorn wird eine hohe Stabilität des Rastgelenkbauteils bereitgestellt.

Durch die vorteilhafte Ausgestaltung der Erfindung nach Anspruch 17 wird die Stabilität weiter erhöht, da der zum Teil kreisbogenförmige obere Rand des Aufsatzes an dem Lagerbock in einer entsprechend komplementär geformten Führungsrille in dem zweiten Halteteil des ersten Rastarms geführt wird.

Die übrigen Unteransprüche beziehen sich auf weitere vorteilhafte Ausgestaltungen der Erfindung. Weitere Einzelheiten, Merkmale und Vorteile der Erfindung ergeben sich aus der nachfolgenden Beschreibung einer beispielhaften Ausführungsform der Erfindung anhand der Zeichnung.

Es zeigt:
Fig. 1 eine Explosionsdarstellung einer ersten Ausführungsform der Erfindung von einer Seite,
Fig. 2 die erste Ausführungsform nach Fig. 1 von der gegenüberliegenden Seite her betrachtet,
Fig. 3. eine Detaildarstellung des Lagerbocks im zweiten Rastarm gemäß einer zweiten Ausführungsform der Erfindung, und
Fig. 4 eine Detaildarstellung der Innenseite des zweiten Rastarmteils des ersten Rastarms gemäß der zweiten Ausführungsform der Erfindung.

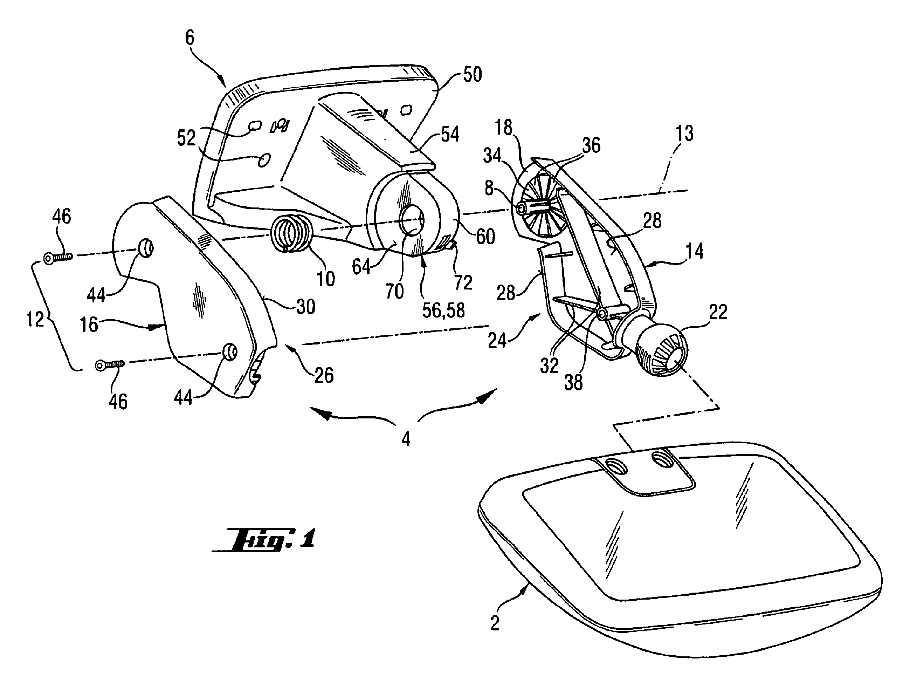

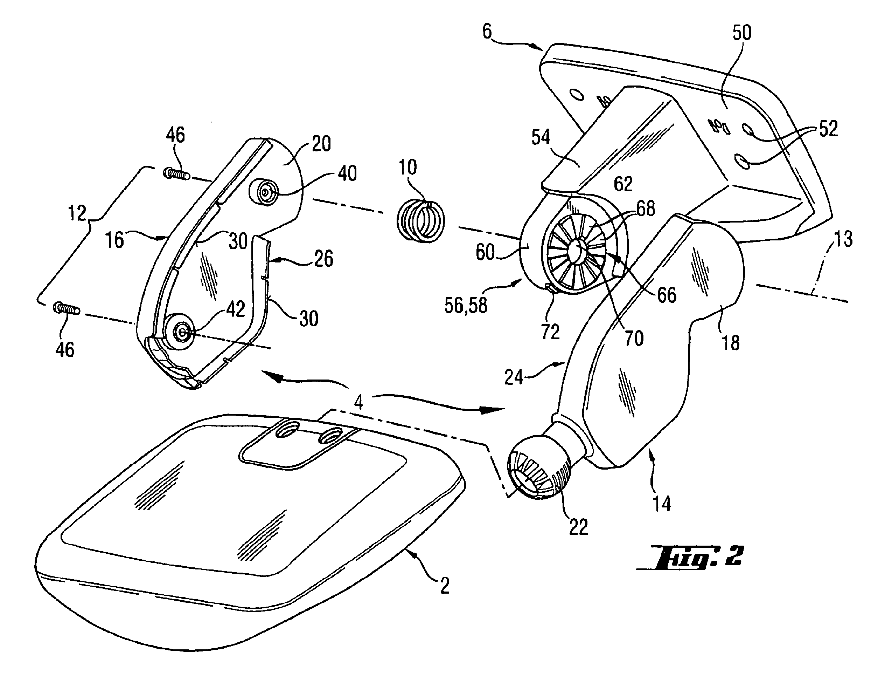

Der in Fig 1 und 2 gezeigte Außenspiegel für Kraftfahrzeuge umfasst einen Spiegelkopf 2, der mittels eines Rastgelenkbauteils mit einem nicht dargestellten Fahrzeug verbindbar ist. Das Rastgelenkbauteil umfasst einen ersten Rastarm 4 und einen zweiten Rastarm 6 die über ein Gelenkachsenbauteil, bestehend aus einen Verbindungsdorn 8, einer Spiralfeder 10 und einer Schraubverbindung 12 miteinander verbunden sind. Durch das Rastgelenkbauteil wird eine Rastgelenkachse 13 festgelegt. Der erste Rastarm 4 besteht aus einem ersten und einem zweiten halbschalenförmigen Rastarmteil 14 und 16. Die beiden Rastarmteile 14 und 16 weisen an ihren dem zweiten Rastarm 6 zugewandten Ende jeweils ein erstes bzw. zweites Halteteil 18 bzw. 20 für das Gelenkachsenbauteil auf. An dem anderen Ende des ersten Rastarmteils 18 ist ein kugelförmiges Spiegelkopf-Anschlussteil 22 vorgesehen an den der Spiegelkopf 2 montiert wird. Zwischen den Halteteilen 18, 20 und dem Spiegelkopf-Anschlussteil 22 spannen die beiden halbschalenförmigen Rastarmteile 14 und 16 zwei große, einander zugewandte, komplementäre Fügeflächen 24 und 26 auf. Die umlaufenden Kanten der beiden Fügeflächen 24 und 26 sind als komplementäre Fügekanten 28 und 30 ausgebildet, die eine formschlüssige Verbindung zwischen den beiden Rastarmteilen 14 und 16 bereitstellen. Innerhalb der Fügekante 28 des ersten Rastarmteils 14 sind innere Verstärkungsrippen 32 angeordnet.

Auf der Innenseite des ersten Halteteils 18 ist eine erste Rastfläche 34 mit ersten Rastelementen 36 angeordnet. Die erste Rastfläche 34 ist kreisförmig ausgebildet und die ersten Rastelemente 36 sind darin in der Form von Kuchenstücken angeordnet. Aus der Mitte der ersten Rastfläche 34 erstreckt sich der Verbindungsdorn 8 in Form eines Schraubdorns, der einstückig an das erste Halteteil 18 und damit an das erste Rastarmteil 14 angeformt ist. Im Bereich der Verstärkungsrippen 32 ist ebenfalls ein sich in Richtung der Rastgelenkachse 13 erstreckender Schraubdorn 38 vorgesehen. Der Schraubdorn 38 ist ebenfalls einstückig an die Innenseite des ersten Rastarmteils 14 angeformt. Auf der Innenseite des zweiten Rastarmteils 16 sind eine Aufnahme 40 für die Aufnahme des Verbindungsdorns 8 und eine Aufnahme 42 für die Aufnahme des Schraubdorns 38 vorgesehen. Die beiden Aufnahmen 40, 42 sind jeweils von einem Schraubloch 44 durchsetzt, so dass mit Schrauben 46 von der Außenseite des zweiten Rastarmteils 15 her die beiden Rastarmteile 14 und 16 miteinander verschraubt werden können.

Der zweite Rastarm 6 umfasst einen im Wesentlichen plattenförmigen Abschnitt 50 mit Montagelöchern 52. Der plattenförmige Abschnitt 50 liegt an dem Fahrzeug an und mittels der Montagelöcher 52 wird der zweite Rastarm 6 an dem Fahrzeug montiert. Aus dem plattenförmigen Abschnitt 50 erstreckt sich ein Hohlzapfen 54, an dessen freiem Ende 58 ein Lagerbock 56 ausgebildet ist. Der Hohlzapfen 54 ist im Bereich einer Längsseite des plattenförmigen Abschnitts 50 verbreitert ausgebildet, um die Stabilität zu erhöhen. Der Lagerbock 56 umfasst eine nach außen gewölbte, streifenförmige Mantelfläche 60, die die Ränder einer ersten Stirnfläche 62 und einer zweiten Stirnfläche 64 miteinander verbindet. Auf der ersten Stirnfläche 62, nach außen dem ersten Halteteil 18 und der ersten Rastfläche 34 zugewandt, ist eine zweite kreisförmige Rastfläche 66 angeordnet, die kuchenstückartig angeordnete zweite Rastelemente 68 umfasst, die komplementär in die ersten Rastelemente 34 der ersten Rastfläche 36 eingreifen. Die erste und die zweite Stirnfläche 62, 64 und damit auch die zweite Rastfläche 66 sind von einer zentralen Bohrung 70 durchsetzt. Im zusammengebauten Zustand wird die zentrale Bohrung 70 von dem Verbindungsdorn 8 durchsetzt. Die Höhe des Lagerbocks 56 zwischen der ersten und der zweiten Stirnfläche 62, 64 ist so gewählt, dass der Lagerbock 56 genau zwischen die beiden Gelenkachsenbauteil-Halteteile 18, 20 der zusammengesetzten Rastarmteile 14, 16 des ersten Rastarms 4 passt. In zusammengebautem Zustand ist der Lagerbock 56 zwischen den beiden Halteteilen 18, 20 für das Gelenkachsenbauteil angeordnet und der Verbindungsdorn 8 durchsetzt die zentrale Bohrung 70 in den beiden Stirnflächen 62, 64.

Bei der Montage des ersten Rastarms 4 an dem zweiten Rastarm bzw. dem Spiegelfuß 6 wird zunächst der erste Rastarmteil 14 mit der ersten Rastfläche 34 auf die zweite Rastfläche 66 auf der geschlossenen Stirnseite 62 des Lagerbocks 56 aufgesetzt, wobei der Verbindungsdorn 8 durch die zentrale Bohrung 70 hindurchragt. Dann wird durch die offene Stirnseite 64 des Lagerbocks 56 die Spiralfeder 10 auf den Verbindungsdorn 8 aufgesetzt, so dass die Spiralfeder 10 den Verbindungsdorn 8 umschließt beziehungsweise der Verbindungsdorn 8 die Spiralfeder 10 durchsetzt. Dann wird der zweite Rastarmteil 16 des ersten Rastarms 4 entlang der Fügekanten 28, 30 auf die erste Hälfte aufgesetzt, wobei der Verbindungsdorn 8 in die erste Aufnahme 40 und der Schraubdorn 38 in die zweite Aufnahme 42 mit den jeweiligen Schraublöchern 44 eingreift. Anschließend werden die Rastarmteile 14 und 16 miteinander verschraubt. Die Spiralfeder 10 ist so dimensioniert, dass die gewünschten Verspannkräfte die beiden Rastflächen 34 und 66 zusammen halten.

Die zylindrische Öffnung 70 in den beiden Stirnflächen 62, 64 des Lagerbocks 56 besitzt in etwa den gleichen Innendurchmesser wie der Außendurchmesser der ersten Aufnahme 40, die am zweiten Halteteil 20 angebracht ist. Durch diese Dimensionierung wird die nötige Stabilität des Rastgelenkbauteils gewährleistet. An der Mantelfläche 60 ist ein Begrenzerzapfen 72 angeformt, der den maximalen Schwenkwinkel des Rastgelenkbauteils begrenzt.

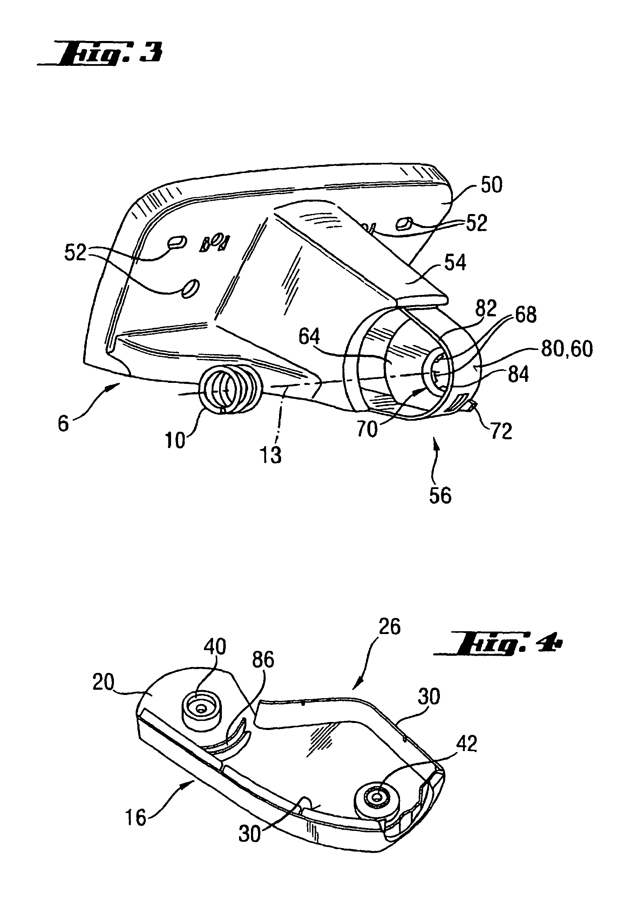

Die Figuren 3 und 4 zeigen eine zweite Ausführungsform der Erfindung, die sich von der ersten Ausführungsform durch die andere Ausgestaltung des Lagerbocks 56 und des zweiten Rastarmteils 16 unterscheidet. Wie in Fig. 3 dargestellt ist, bildet die zweite Stirnfläche 64 die Rückseite der ersten Stirnfläche 62. Von dem Rand der zweiten Stirnfläche 64 erstreckt sich ein Aufsatz 80 von den beiden Stirnflächen 62, 64 weg in Richtung der Rastgelenkachse 13 und endet in einem oberen Rand 82. Der Aufsatz 80 bildet somit die Mantelfläche 60 des Lagerbocks 56. Im Querschnitt senkrecht zur Rastgelenkachse 13 weist der Aufsatz 60 einen kreisbogenförmigen Abschnitt 84 auf.

Dieser kreisbogenförmige Abschnitt 84 greift in eine Führungsrille 86 ein, die auf der Innenseite des zweiten Halteteils 18 ausgebildet ist, wie dies in Fig. 4 dargestellt ist. Beim Verschwenken des Rastgelenkbauteils wird der kreisbogenförmig Abschnitt 84 in der Führungsrille 86 gehalten und geführt. Hierdurch wird die Stabilität des Rasgelenkbauteils weiter erhöht.

### Bezugszeichenliste:

| | |
|---|---|
| 2 | Spiegelkopf |
| 4 | erster Rastarm |
| 6 | zweiter Rastarm |
| 8 | Verbindungsdorn |
| 10 | Spiralfeder |
| 12 | Schraubverbindung |
| 13 | Rastgelenkachse |
| 14 | erster Rastarmteil |
| 16 | zweiter Rastarmteil |
| 18 | erstes Halteteil |
| 20 | zweites Halteteil |
| 22 | Spiegelkopf-Anschlussteil |
| 24 | Fügefläche an 14 |
| 26 | Fügefläche an 16 |
| 28 | Fügekante des ersten Rastarmteils |
| 30 | Fügekante des zweiten Rastarmteils |
| 32 | Verstärkungsrippen |
| 34 | erste Rastfläche |
| 36 | erste Rastelemente |
| 38 | Schraubdorn |
| 40 | Aufnahme für 8 |
| 42 | Aufnahme für 38 |
| 44 | Schraubloch |
| 46 | Schrauben |
| | |
| 50 | plattenförmiger Abschnitt von 6 |
| 52 | Montagelöcher in 50 |
| 54 | Hohlzapfen |
| 56 | Lagerbock |
| 58 | freies Ende von 54 |
| 60 | Mantelfläche von 56 |
| 62 | erste Stirnfläche |
| 64 | zweite Stirnfläche |
| 66 | zweite Rastfläche |
| 68 | zweite Rastelemente |
| 70 | zentrale Bohrung in 62, 64 |
| 72 | Begrenzerzapfen |
| | |
| 80 | Aufsatz an 64 |
| 82 | oberer Rand von 80 |
| 84 | kreisbogenförmiger Abschnitt von 82 |
| 86 | Führungsrille in 16 |

## Patentansprüche

1. Rastgelenkbauteil, insbesondere für eine Halterung eines Außenspiegels für Nutzfahrzeuge, mit
einem ersten und einem zweiten Rastarm (4, 6), die durch ein Gelenkachsenbauteil (8, 10, 12) um eine Rastgelenkachse (13) verschwenkbar miteinander verbunden sind,
wobei der erste Rastarm (4) eine erste Rastfläche (34) mit ersten Rastelementen (36), aufweist,
wobei der zweite Rastarm (6) eine zweite Rastfläche (66) mit zweiten Rastelementen (68) aufweist, die komplementär in die ersten Rastelemente (36) eingreifen,
wobei der erste Rastarm (4) einen ersten Rastarmteil (14) mit einem ersten Halteteil (18) für das Gelenkachsenbauteil und einen zweiten Rastarmteil (16) mit einem zweiten Halteteil (20) für das Gelenkachsenbauteil umfasst,
wobei die beiden Halteteile (18, 20) für das Gelenkachsenbauteil einander gegenüberliegend angeordnet sind,
wobei der zweite Rastarm (6) einen Lagerbock (56) umfasst, der von dem Gelenkachsenbauteil durchsetzt wird, und
wobei der erste und der zweite Rastarmteil (14, 16) lösbar miteinander verbunden sind,
**dadurch gekennzeichnet,**
**dass** der erste und der zweite Rastarmteil (14, 16) über komplementäre Fügeflächen (24, 26) formschlüssig miteinander verbunden sind.

2. Rastgelenkbauteil nach einem der vorhergehenden Ansprüche, **dadurch gekennzeichnet, dass** die beiden Rastarmteile (14, 16) mittels wenigstens einer Schraubverbindung (12) lösbar miteinander verbunden sind.

3. Rastgelenkbauteil nach einem der vorhergehenden Ansprüche, **dadurch gekennzeichnet, dass** die Dicke des ersten Rastarms (4) in Richtung der Rastgelenkachse (13) kleiner ist als die Breite des ersten Rastarms (4) quer zur Rastgelenkachse (13).

4. Rastgelenkbauteil nach einem der vorhergehenden Ansprüche, **dadurch gekennzeichnet, dass** die beiden Rastarmteile (14, 16) des ersten Rastarms (4) in etwa gleich groß sind.

5. Rastgelenkbauteil nach einem der vorhergehenden Ansprüche 1 bis 3, **dadurch gekennzeichnet, dass** einer der beiden Rastarmteile (16) kleiner ist als der andere Rastarmteil (14), und dass die Querschnittsfläche des kleineren Rastarms (16) senkrecht zur Rastgelenkachse (13) wenigstens doppelt so groß ist wie erste oder zweite Rastfläche (34, 66).

6. Rastgelenkbauteil nach einem der vorhergehenden Ansprüche, **dadurch gekennzeichnet,**
**dass** die beiden Rastarmteile (14, 16) jeweils eine Außenseite und jeweils einander zugewandte Innenseiten aufweisen,
**dass** die erste Rastfläche (34) auf der Innenseite des ersten Halteteils (18) für das Gelenkachsenbauteil ausgebildet ist, und
**dass** die erste und zweite Rastfläche (34, 66) von der Rastgelenkachse (13) durchsetzt sind.

7. Rastgelenkbauteil nach Anspruch 6, **dadurch gekennzeichnet, dass** das Gelenkachsenbauteil (8, 10, 12) ein Federelement (10) umfasst, das zwischen dem zweiten Halteteil (20) am ersten Rastarm (4) und der zweiten Rastfläche (66) am zweiten Rastarm (6) zum Verspannen der beiden Rastarme (4, 6) gegeneinander angeordnet ist.

8. Rastgelenkbauteil nach einem der vorhergehenden Ansprüche, **dadurch gekennzeichnet, dass** das Gelenkachsenbauteils (8, 10, 12) einen Verbindungsdorn (8) umfasst, der an einem der beiden Halteteile (18, 20) befestigt ist und den Lagerbock (56) im zweiten Rastarm (6) durchsetzt.

9. Rastgelenkbauteil nach Anspruch 8, **dadurch gekennzeichnet, dass** der Verbindungsdorn (8) einstückig mit dem ersten oder dem zweiten Rastarmteil (14, 16) ausgebildet ist.

10. Rastgelenkbauteil nach Anspruch 8 oder 9, **dadurch gekennzeichnet, dass** auf der Innenseite des zweiten oder ersten Halteteils (20, 18) eine Aufnahme (40) ausgebildet ist, in die der Verbindungsdorn (8) eingreift.

11. Rastgelenkbauteil nach einem der Ansprüche 8 bis 10, **dadurch gekennzeichnet,**
**dass** der Verbindungsdorn (8) ein Schraubdorn ist,
**dass** das zweite bzw. das erste Rastarmteil (16, 14) ein von der Außenseite zugängliches Schraubloch (44) aufweist, das mit dem Schraubdorn (8) und der Aufnahme (40) für den Schraubdorn () fluchtet, und
**dass** dieses Schraubloch (44) und der Schraubdorn (8) Teil der wenigstens einen Schraubverbindung (12) zum Verbinden der beiden Rastarmteile (14, 16) des ersten Rastarms (4) sind.

12. Rastgelenkbauteil nach einem der vorhergehenden Ansprüche, **dadurch gekennzeichnet, dass** die erste Rastfläche (34) auf der Innenseite des ersten Halteteils (18) für das Gelenkachsenbauteil (8, 10, 12) ausgebildet und quer zur Rastgelenkachse (13) angeordnet ist.

13. Rastgelenkbauteil nach einem der vorhergehenden Ansprüche, **dadurch gekennzeichnet, dass** die beiden Rastarmteile (14, 16) des ersten Rastarms (4) als eine erste und eine zweite Halbschale ausgebildet sind.

14. Rastgelenkbauteil nach Anspruch 13, **dadurch gekennzeichnet, dass** wenigstens in einer der beiden halbschalenförmigen Rastarmteile (14, 16) Verstärkungsrippen (32) ausgebildet sind.

15. Rastgelenkbauteil nach einem der vorhergehenden Ansprüche, **dadurch gekennzeichnet,**
**dass** der Lagerbock (56) eine erste und eine zweite sich quer zur Rastgelenkachse (13) erstreckende, nach außen weisende Stirnfläche (62, 64) aufweist,
**dass** die erste Stirnfläche (62) die zweite Rastfläche (34) mit darauf angeordneten zweiten Rastelementen (36) ist, und
**dass** die beiden Stirnflächen (62, 64) eine zentrale Bohrung (70) aufweisen, die von dem Gelenkachsenbauteil (8, 10, 12) durchsetzt wird.

16. Rastgelenkbauteil nach Anspruch 15, **dadurch gekennzeichnet, dass** die beiden Stirnflächen (62, 64) voneinander beabstandet und durch einen gebogenen Mantelfläche (60) miteinander verbunden sind.

17. Rastgelenkbauteil nach Anspruch 15 oder 16, **dadurch gekennzeichnet,**
**dass** sich von der zweiten Stirnfläche (64) ein Absatz (80) von den beiden Stirnflächen (62, 64) weg in Richtung der Rastgelenkachse (13) erstreckt, dessen oberer Rand (82) einen kreisbogenförmigen Abschnitt (84) aufweist, und
**dass** die den Lagerbock (56) übergreifende Innenseite des zweiten Halteteils (20) eine Führungsrille (86) für den kreisbogenförmigen Abschnitt (84) aufweist.

18. Rastgelenkbauteil nach Anspruch 17, **dadurch gekennzeichnet, dass** das Federelement eine Spiralfeder (10) ist, die innerhalb Absatzes (80) angeordnet und von dem Verbindungsdorn (8) durchsetzt ist.

19. Rastgelenkbauteil nach einem der vorhergehenden Ansprüche, **dadurch gekennzeichnet, dass** der erste und der zweite Rastarm (4, 6) aus Kunststoff bestehen.

20. Außenspiegel für Kraftfahrzeuge mit einem Spiegelkopf (2) und einem Rastgelenkbauteil nach einem der vorhergehenden Ansprüche, wobei an dem ersten Rastarm (4) der Spiegelkopf (2) befestigt ist und der zweite Rastarm (6) als Spiegelfuß ausgebildet ist.

## Claims

1. A retention hinge component, in particular for a mount of an exterior rear view mirror for utility vehicles, comprising
a first and a second retention arm (4, 6) connected to each other by a hinge axle component (8, 10, 12) so as to be rotatable about a retention hinge axle (13), wherein the first retention arm (4) includes a first retention surface (34) having first retention elements (36),
wherein the second retention arm (6) includes a second retention surface (66) having second retention elements (68) engaging in the first retention elements (36) in a complementary manner,
wherein the first retention arm (4) includes a first retention arm part (14) having a first retainer part (18) for the hinge axle component and a second retention arm part (16) having a second retainer part (20) for the hinge axle component,
wherein the two retainer parts (18, 20) for the hinge axle component are disposed oppositely to each other, and
wherein the second retention arm (6) includes a bearing block (56) through which the hinge axle component extends,
wherein the first and the second retention arm part (14, 16) are releasably connected to each other,
**characterized in that**
the first and the second retention arm part (14, 16) are connected to each other by form-fit via complementary joining surfaces (24, 26).

2. The retention hinge component according to any one of the preceding claims, **characterized in that** the two retention arm parts (14, 16) are releasably connected to each other with the aid of at least one screw connection (12).

3. The retention hinge component according to any one of the preceding claims, **characterized in that** the thickness of the first retention arm (4) in the direction of the retention hinge axle (13) is smaller than the width of the first retention arm (4) in a direction transverse to the retention hinge axle (13).

4. The retention hinge component according to any one of the preceding claims, **characterized in that** the two retention arm parts (14, 16) of the first retention arm (4) have an approximately identical size.

5. The retention hinge component according to any one of the preceding claims 1 to 3, **characterized in that** one of the two retention arm parts (16) is smaller than the other retention arm part (14), and that the cross-sectional area of the smaller retention arm (16) in a direction perpendicular to the retention hinge axle (13) has at least twice the size of the first or second retention surface (34, 66).

6. The retention hinge component according to any one of the preceding claims, **characterized in that**
the two retention arm parts (14, 16) each present an outer side and mutually facing inner sides,
the first retention surface (34) is formed on the inside of the first retainer part (18) for the hinge axle component, and
the retention hinge axle (13) extends through the first and the second retention surface (34, 66).

7. The retention hinge component according to claim 6, **characterized in that** the hinge axle component (8, 10, 12) includes a spring member (10) disposed between the second retainer part (20) on the first retention arm (4) and the second retention surface (66) on the second retention arm (6) for bracing the two retention arms (4, 6) against each other.

8. The retention hinge component according to any one of the preceding claims, **characterized in that** the hinge axle component (8, 10, 12) includes a connecting pin (8) which is fastened to one of the two retainer parts (18, 20) and extends through the bearing block (56) in the second retention arm (6).

9. The retention hinge component according to claim 8, **characterized in that** the connecting pin (8) is formed integrally with the first or the second retention arm part (14, 16).

10. The retention hinge component according to claim 8 or 9, **characterized in that** a reception (40) in which the connecting pin (8) engages is formed on the inside of the second or first retainer part (20, 18).

11. The retention hinge component according to any one of claims 8 to 10, **characterized in that**
the connecting pin (8) is a threaded pin,
the second or the first retention arm part (16, 14) has a screw hole (44) accessible from outside, which is aligned with the threaded pin (8) and with the reception (40) for the threaded pin (), and
the said screw hole (44) and the threaded pin (8) are part of the at least one screw connection (12) for connecting the two retention arm parts (14, 16) of the first retention arm (4).

12. The retention hinge component according to any one of the preceding claims, **characterized in that** the first retention surface (34) is formed on the inside of the first retainer part (18) for the hinge axle component (8, 10, 12) and is arranged in a direction transverse to the retention hinge axle (13).

13. The retention hinge component according to any one of the preceding claims, **characterized in that** the two retention arm parts (14, 16) of the first retention arm (4) have the form of a first and a second shell.

14. The retention hinge component according to claim 13, **characterized in that** reinforcing ribs (32) are formed in at least one of the two shell-type retention arm parts (14, 16).

15. The retention hinge component according to any one of the preceding claims, **characterized in that**
the bearing block (56) includes a first and a second end surface (62, 64) extending in a direction transverse to the retention hinge axle (13) and facing outward,
the first end surface (62) is the second retention surface (34) having second retention elements (36) arranged thereon, and
the two end surfaces (62, 64) include a central bore (70) through which the hinge axle component (8, 10, 12) extends.

16. The retention hinge component according to claim 15, **characterized in that** the two end surfaces (62, 64) are spaced apart and connected to each other by a curved jacket strip (60).

17. The retention hinge component according to claim 15 or 16, **characterized in that** a flange (80) extends from the second end surface (64), away from the two end surfaces (62, 64), in the direction of the retention hinge axle (13), the upper rim (82) of said flange including a circular arc-shaped portion (84), and
the inner side of the second retainer part (20), which reaches around the bearing block (56), includes a guide channel (86) for the circular arc-shaped portion (84).

18. The retention hinge component according to claim 17, **characterized in that** the spring member is a coil spring (10) disposed within the flange (80), through which the connecting pin (8) extends.

19. The retention hinge component according to any one of the preceding claims, **characterized in that** the first and the second retention arm (4, 6) are made of synthetic material.

20. An exterior rear view mirror for automotive vehicles comprising a mirror head (2) and a retention hinge component according to any one of the preceding claims, wherein the mirror head (2) is fastened to the first retention arm (4), and the second retention arm (6) is executed as a mirror base.

## Revendications

1. Composant articulé autoverrouillant, destiné notamment au support d'un rétroviseur pour véhicules utilitaires, avec
un premier et un deuxième bras à crans (4, 6) raccordés l'un à l'autre par un composant à axe d'articulation (8, 10, 12), de manière à pouvoir pivoter autour d'un axe d'articulation autoverrouillant (13),
le premier bras à crans (4) comportant une première surface d'enclenchement (34) avec de premiers éléments d'enclenchement (36),
le deuxième bras à crans (6) comportant une deuxième surface d'enclenchement (66) avec de seconds éléments d'enclenchement (68), lesquels s'engagent dans les premiers éléments d'enclenchement (36) de manière complémentaire,
le premier bras à crans (4) comprenant une première pièce de bras à crans (14) avec une première partie de maintien (18) pour le composant à axe d'articulation, et une deuxième pièce de bras à crans (16) avec une deuxième partie de maintien (20) pour le composant à axe d'articulation,
les deux parties de maintien (18, 20) pour le composant à axe d'articulation étant disposées vis-à-vis l'une de l'autre,
le deuxième bras à crans (6) comprenant un support de palier (56) où est monté le composant à axe d'articulation,
la première et la deuxième pièce de bras à crans (14, 16) étant raccordées l'une à l'autre de manière amovible,
**caractérisé**
**en ce que** la première et la deuxième pièce de bras à crans (14, 16) sont raccordées mécaniquement l'une à l'autre au moyen de surfaces d'assemblage (24, 26) complémentaires.

2. Composant articulé autoverrouillant selon la revendication 1, **caractérisé en ce que** les deux pièces de bras à crans (14, 16) sont raccordées l'une à l'autre de manière amovible au moyen d'au moins une connexion filetée (12).

3. Composant articulé autoverrouillant selon l'une des revendications précédentes, **caractérisé en ce que** l'épaisseur du premier bras à crans (4) dans la direction de l'axe d'articulation autoverrouillant (13) est inférieure à la largeur du premier bras à crans (4) transversalement à l'axe d'articulation autoverrouillant (13).

4. Composant articulé autoverrouillant selon l'une des revendications précédentes, **caractérisé en ce que** les deux pièces de bras à crans (14, 16) du premier bras à crans (4) sont sensiblement de même dimension.

5. Composant articulé autoverrouillant selon l'une des revendications précédentes 1 à 3, **caractérisé en ce qu'**une des deux pièces de bras à crans (16) est de dimension inférieure à l'autre pièce de bras à crans (14), et **en ce que** la surface de section transversale du bras à crans (16) le plus petit perpendiculairement à l'axe d'articulation autoverrouillant (13) est au moins deux fois supérieure à la première ou à la deuxième surface d'enclenchement (34, 66).

6. Composant articulé autoverrouillant selon l'une des revendications précédentes, **caractérisé**
**en ce que** les deux pièces de bras à crans (14, 16) présentent chacune une face extérieure et une face intérieure opposée à la face intérieure de l'autre pièce de bras à crans,
**en ce que** la première surface d'enclenchement (34) est réalisée sur la face intérieure de la première partie de maintien (18) pour le composant à axe d'articulation, et
**en ce que** la première et la deuxième surface d'enclenchement (34, 66) sont traversées par l'axe d'articulation autoverrouillant (13).

7. Composant articulé autoverrouillant selon la revendication 6, **caractérisé en ce que** le composant à axe d'articulation (8, 10, 12) comprend un élément à ressort (10) disposé entre la deuxième partie de maintien (20) sur le premier bras à crans (4) et la deuxième surface d'enclenchement (66) sur le deuxième bras à crans (6) pour le serrage des deux bras à crans (4, 6) l'un contre l'autre.

8. Composant articulé autoverrouillant selon l'une des revendications précédentes, **caractérisé en ce que** le composant à axe d'articulation (8, 10, 12) comprend une broche de connexion (8) fixée contre une des deux parties de maintien (18, 20) et montée dans le support de palier (56) du deuxième bras à crans (6).

9. Composant articulé autoverrouillant selon la revendication 8, **caractérisé en ce que** la broche de connexion (8) est réalisée d'un seul tenant avec la première ou la deuxième pièce de bras à crans (14, 16).

10. Composant articulé autoverrouillant selon la revendication 8 ou la revendication 9, **caractérisé en ce qu'**une réception (40) dans laquelle s'engage la broche de connexion (8) est formée sur la face intérieure de la deuxième ou de la première partie de maintien (20, 18).

11. Composant articulé autoverrouillant selon l'une des revendications 8 à 10, **caractérisé en ce que** la broche de connexion (8) est une broche filetée,
**en ce que** la deuxième ou la première pièce de bras à crans (16, 14) comporte un trou fileté (44) accessible de l'extérieur, lequel est aligné avec la broche filetée (8) et la réception (40) pour la broche filetée, et
**en ce que** ledit trou fileté (44) et la broche filetée (8) font partie de la ou des connexions filetées (12) permettant l'assemblage des deux pièces de bras à crans (14, 16) du premier bras à crans (4).

12. Composant articulé autoverrouillant selon l'une des revendications précédentes, **caractérisé en ce que** la première surface d'enclenchement (34) est formée sur la face intérieure de la première partie de maintien (18) pour le composant à axe d'articulation (8, 10, 12) et est disposée transversalement à l'axe d'articulation autoverrouillant (13).

13. Composant articulé autoverrouillant selon l'une des revendications précédentes, **caractérisé en ce que** les deux pièces de bras à crans (14, 16) du premier bras à crans (4) sont réalisées sous forme de première et de deuxième demi-coques.

14. Composant articulé autoverrouillant selon la revendication 13, **caractérisé en ce que** des nervures de renforcement (32) sont prévues au moins dans une des deux pièces de bras à crans (14, 16) en forme de demi-coques.

15. Composant articulé autoverrouillant selon l'une des revendications précédentes, **caractérisé**
**en ce que** le support de palier (56) comporte une première et une deuxième surfaces frontales (62, 64) s'étendant transversalement à l'axe d'articulation autoverrouillant (13) et dirigées vers l'extérieur,
**en ce que** la première surface frontale (62) est la deuxième surface d'enclenchement (34) avec de seconds éléments d'enclenchement (36) disposés sur celle-ci, et
**en ce que** les deux surfaces frontales (62, 64) comportent un alésage central (70) où est monté le composant à axe d'articulation (8, 10, 12).

16. Composant articulé autoverrouillant selon la revendication 15, **caractérisé en ce que** les deux surfaces frontales (62, 64) sont espacées l'une de l'autre et raccordées l'une à l'autre par une surface latérale (60) cintrée.

17. Composant articulé autoverrouillant selon la revendication 15 ou la revendication 16, **caractérisé**
**en ce qu'**un épaulement (80) de la deuxième surface frontale (64) s'étend dans la direction de l'axe d'articulation autoverrouillant (13) en s'éloignant des deux surfaces frontales (62, 64), le bord supérieur (82) dudit épaulement comportant une partie en arc de cercle (84), et
**en ce que** la face intérieure de la deuxième partie de maintien (20) opposée au support de palier (56) comporte une gouttière de guidage (86) pour la partie en arc de cercle de l'épaulement (84).

18. Composant articulé autoverrouillant selon la revendication 17, **caractérisé en ce que** l'élément à ressort est un ressort hélicoïdal (10) disposé à l'intérieur de l'épaulement (80) et que traverse la broche de connexion (8).

19. Composant articulé autoverrouillant selon l'une des revendications précédentes, **caractérisé en ce que** le premier et le deuxième bras à crans (4, 6) sont en matière synthétique.

20. Rétroviseur pour véhicules automobiles, avec une tête de rétroviseur (2) et un composant articulé autoverrouillant selon l'une des revendications précédentes, où la tête de rétroviseur (2) est fixée sur le premier bras à crans (4) et où le deuxième bras à crans (6) est réalisé comme pied de rétroviseur.
